# DEMANDE DE BREVET EUROPEEN

(11) **EP 1 486 478 A1**
(43) Date de publication de la demande: **15.12.2004**
(21) Numéro de dépôt: 04300322.7
(22) Date de dépôt: 11.06.2004
(51) Int. Cl.: C05F 17/02, C05F 17/00

(54) **Procédé de préparation de compost et dispositif permettant la mise en oeuvre dudit procédé**

(30) Priorité: 12.06.2003 FR 0307063
(71) Demandeur: Pena Environnement, 33127 Saint Jean D'Illac (FR)
(72) Inventeur: Pena, Marc, 33610 Canejan (FR)
(74) Mandataire: Fantin, Laurent

(57) **Abrégé**

L'objet de l'invention est un procédé de préparation de compost caractérisé en ce qu'il comprend la succession des étapes suivantes :
- préparation d'une matière de base comprenant une première matière fermentescible et une seconde matière à co-produits,
- mélange grossier de cette préparation équilibrée en azote et carbone pour constituer un gros tas aéré,
- passage dans un mélangeur,
- maintien statique dans une enceinte de fermentation,
- maintien statique dans une enceinte de maturation, et
- passage dans un crible pour récupérer la fraction ou les fractions granulométriques souhaitées.

L'invention couvre aussi le dispositif associé.

## Description

La présente invention concerne un procédé de préparation de compost ainsi que le dispositif pour la mise en oeuvre de ce procédé.

Il est à rappeler que la définition du compostage est : procédé biologique aérobie de transformation des déchets organiques pour aboutir à un produit solide, stable, riche en humus.

Plus précisément, le but est de produire une substance présentant des qualités d'amendement.

Les composts sont utilisés dans l'agriculture prise dans son sens le plus large, dans l'horticulture, les ensembles paysagés comme les jardins et autres terrains de sport, les remises en culture mais aussi de façon indirecte pour la fabrication de terreaux plus travaillés et étudiés pour des usages spécifiques.

En agriculture, le compost permet de remplacer une partie des fumures de fond telles la potasse et la chaux.

De plus, l'intérêt du compost est aussi son rôle dans la structure physique du sol en compensant les tassements, l'érosion ou en augmentant les disponibilités en eau.

Le compost a aussi un rôle chimique en permettant de lutter contre l'appauvrissement du sol en éléments nutritifs, de limiter l'acidité et aussi un rôle biologique en luttant contre la baisse du taux de matière organique et contre l'appauvrissement en microflore bactériologique aérobie (bactéries, champignons).

Suivant les utilisations, on choisira la composition et la granulométrie du compost.

Le processus de décomposition est bien connu et comprend essentiellement deux phases :
- la **fermentation active** qui consiste à placer de la matière fermentescible contenant un fort pourcentage de carbone et d'azote en présence d'humidité et d'oxygène donc d'air et à laisser agir des micro-organismes qui transforment les sucres solubles et les amidons ainsi que la cellulose et la lignine. Cette phase est très exothermique.
- La **maturation** qui décompose les polymères en acides organiques et en acides aminés en présence de microflore. Cette phase, de façon générale également exothermique, doit se dérouler à plus faible température pour permettre le développement de la flore mésophile.

La température atteinte lors de la phase de décomposition est actuellement de l'ordre de 50 à 65°C.

Cette production d'énergie est engendrée par l'action des micro-organismes, lors du processus de digestion.

Durant la phase de fermentation, la première partie est dite mésophile car elle concerne l'action des micro-organismes, sur les tissus tendres. Ceci correspond à un pourrissement.

La seconde partie du processus de décomposition est dite thermophile car la digestion est plus rapide et certains germes pathogènes sont neutralisés mais sans garantie d'une hygiénisation parfaite.

Lors de la phase de maturation, la température est beaucoup plus basse, de l'ordre de 30°C, si bien que l'activité des micro-organismes peut être complétée par des organismes de plus grande taille. Durant cette phase, il convient de brasser le mélange pour assurer une parfaite aération.

Si le milieu est trop sec, il y a lieu de prévoir un arrosage.

Durant cette dernière phase, la température peut remonter mais au plus à 40°C.

Ce déroulement connu du compostage reste insatisfaisant car il est trop long, de quelques mois à une année lorsqu'il est réalisé en extérieur.

De plus l'hygiénisation est incomplète et surtout non homogène sur l'ensemble du volume.

Or les besoins en compost augmentent continuellement et surtout le recyclage sélectif conduit à disposer d'importants volumes de déchets verts notamment.

Parallèlement, le traitement de plus en plus poussé des eaux usées par les stations d'épuration conduisent à générer d'importants volumes de boues. Or ces volumes ne peuvent plus être absorbés par le seul épandage direct dont la pérennité est remise en cause. Il devient nécessaire de trouver des débouchés industriels venant se substituer à l'épandage.

La réglementation impose maintenant un retraitement des déchets produits en quantité et, si possible, un retraitement valorisant.

Enfin, de nombreuses normes obligent les fabricants industriels de compost à respecter des règles pour organiser la régularité de la production, maîtriser les risques et assurer une traçabilité complète. Ceci reste très difficile, voire impossible en milieu ouvert.

La tendance est même de se rapprocher des contraintes qualité et sécurité imposées à l'agroalimentaire.

Dans le cas de la présente invention, afin de maîtriser le processus, il est retenu la production en enceinte close.

De façon résumée, le procédé de préparation de compost selon l' invention, dans son meilleur mode de réalisation, comprend la succession des étapes suivantes :
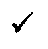 préparation d'une matière de base comprenant une première matière fermentescible en sorte d'apporter une fraction azotée et une seconde matière à co-produits en sorte d'apporter un milieu structurant et une fraction carbonée,
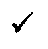 mélange grossier de cette préparation équilibrée en azote et carbone pour constituer un gros tas aéré et dont les matières liquides, généralement apportées par les déchets de boues organiques, ont été absorbées,
passage dans un mélangeur en sorte d'émotter ce mélange grossier, de l'aérer et de le brasser intimement,
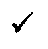 maintien statique dans une enceinte de fermentation et circulation d'air à travers le mélange avec contrôle des paramètres température, taux d'oxygène, degré hygrométrique,
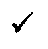 maintien statique dans une enceinte de maturation, et
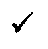 passage dans un crible pour récupérer la fraction ou les fractions granulométriques souhaitées.

Le procédé prévoit aussi de faire circuler l'air à travers l'ensemble du mélange de façon homogène pour atteindre tous les points du mélange.

De plus, au cours de l'étape de fermentation, le procédé prévoit de faire circuler l'air en circuit fermé en sorte de régler le degré hygrométrique par apport d'eau, l'apport en oxygène et la température par apport d'air frais.

La température pour assurer une hygiénisation du mélange par élimination de la flore pathogène et du pouvoir germinatif des graines adventives est de 74°C.

L'invention couvre aussi le dispositif de fabrication de compost pour la mise en oeuvre de ce procédé et comporte dans son meilleur mode de réalisation :
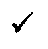 une zone d'accueil de la première fermentescible et de la seconde matière à co-produits,
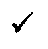 une zone de pré-mélange,
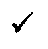 un mélangeur,
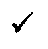 une enceinte close de fermentation,
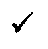 une enceinte de maturation, et
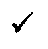 une installation de criblage.

De préférence, l'enceinte de fermentation close est un tunnel longitudinal avec une porte d'entrée et une porte de sortie qui comprend un plancher, des murs, un plafond, ledit plancher utilisé comprenant des canalisations noyées dans ce plancher et des buses de sortie en très grand nombre, ces ensembles étant alimentés en air sous pression à partir d'un groupe de ventilation forcée.

Le procédé est maintenant décrit en détail suivant un mode de réalisation particulier, non limitatif et un complément est donné à titre indicatif d'une installation permettant la mise en oeuvre du procédé, ceci en regard des dessins annexés qui représentent :
- figure 1, une vue schématique de dessus d'une installation pour la mise en oeuvre du procédé,
- figure 2A, une vue schématique de dessus d'une enceinte de fermentation avec un plancher soufflant,
- figure 2B, une vue en coupe longitudinale de l'enceinte de la figure 2A,
- figure 2C, une vue en coupe transversale de l'enceinte de la figure 2A,
- figure 3A, une vue schématique en élévation latérale de l' installation de mélange,
- figure 3B, une vue de dessus de l' installation de la figure 3A,
- figure 4A, une vue schématique en élévation latérale de l' installation de criblage,
- figure 4B, une vue schématique de dessus de l'installation de la figure 4A,

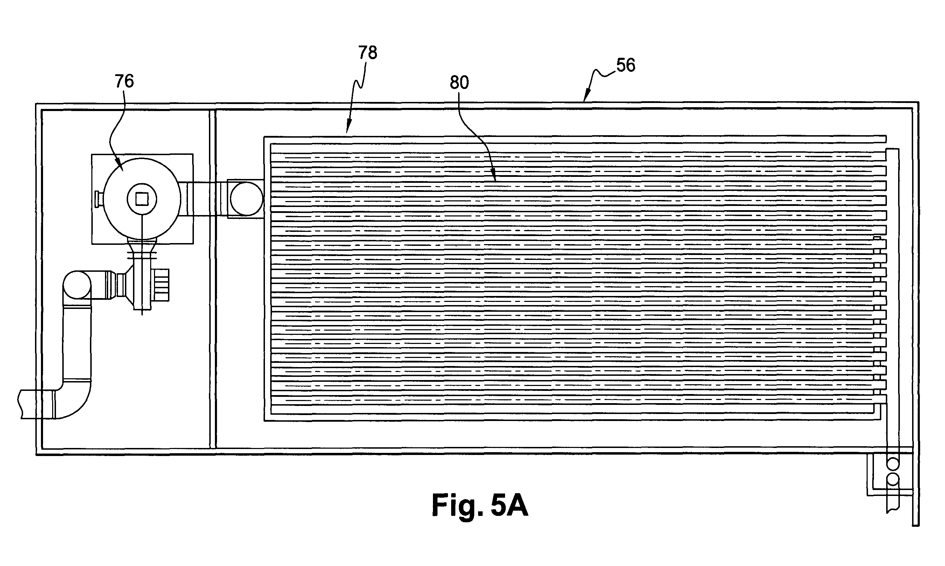

- figure 5A, une vue schématique de dessus d'un biofiltre, et

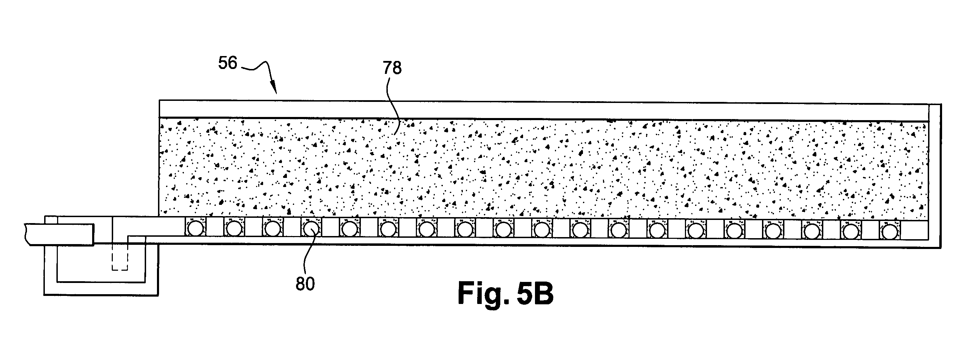

- figure 5B, une vue schématique en coupe du biofiltre de la figure 5A.

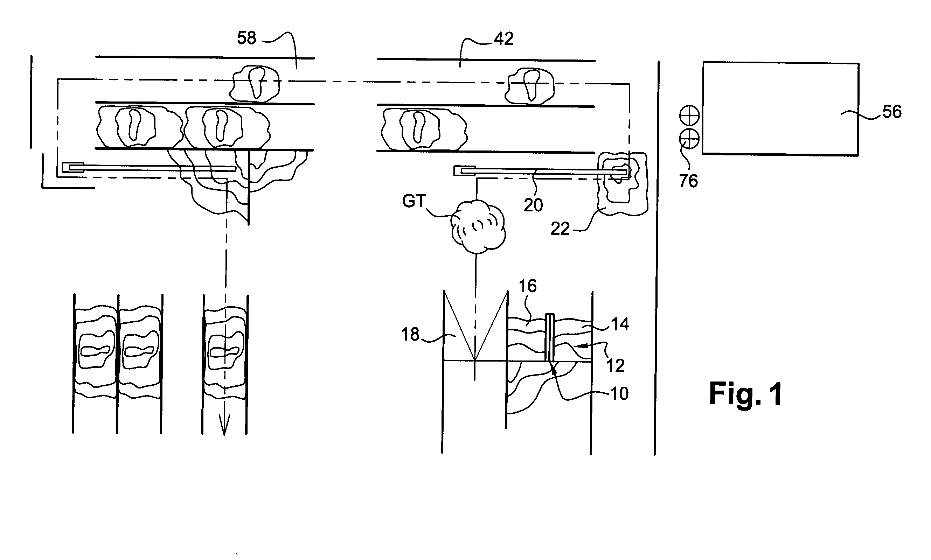

Le procédé selon la présente invention consiste à réceptionner dans la zone 10 d'accueil les produits 12 de base et la description qui va suivre est faite notamment en regard de la figure 1.

Ces produits de base comprennent une première matière fermentescible 14 composée des résidus organiques de station d'épuration et/ou de la fraction fermentescible des ordures ménagères et/ou des déjections animales et/ou des déchets de l'industrie alimentaire et/ou de l'industrie du papier et/ou gazon, feuilles et plus largement tous les déchets organiques, c'est-à-dire les produits apportant généralement la plus forte fraction azotée.

Cette matière de base comprend aussi une seconde matière dite à co-produits 16, constitués essentiellement des matières organiques cellulo-ligneuses, de taille adaptée. Cette seconde matière sert de structurant au mélange et comprend branchages, souches ainsi que les résidus de la transformation du bois, copeaux, écorces ou encore les déchets de culture comme les pailles, les rafles de maïs pour autant que ces matières ne soient pas broyées trop finement. Cette seconde matière en plus de l'effet structurant apporte généralement la plus forte fraction carbonée.

La première et la seconde matières sont mélangées dans la zone 18 dite de pré mélange pour obtenir un ensemble sensiblement homogène en répartition. On obtient ainsi un mélange équilibré en azote / carbone, fonction du produit final recherché. En dosant ce rapport, on agit sur la composition finale du compost.

Cette opération de pré-mélange est réalisée grossièrement au chargeur mécanique.

Ce mélange grossier est appelé dans le jargon un "gros tas" et il permet d'assurer une premier mélange et notamment quand il y a un mélange avec des boues organiques de station d'épuration qui ont un fort taux d'humidité, ce gros tas assure une absorption de l'eau. Ce mélange devient à peu près homogène alors qu'il est constitué au départ de produits très hétérogènes.

Néanmoins, ce gros tas n'est pas suffisant pour obtenir un mélange parfaitement adapté pour la phase de fermentation qui va suivre.

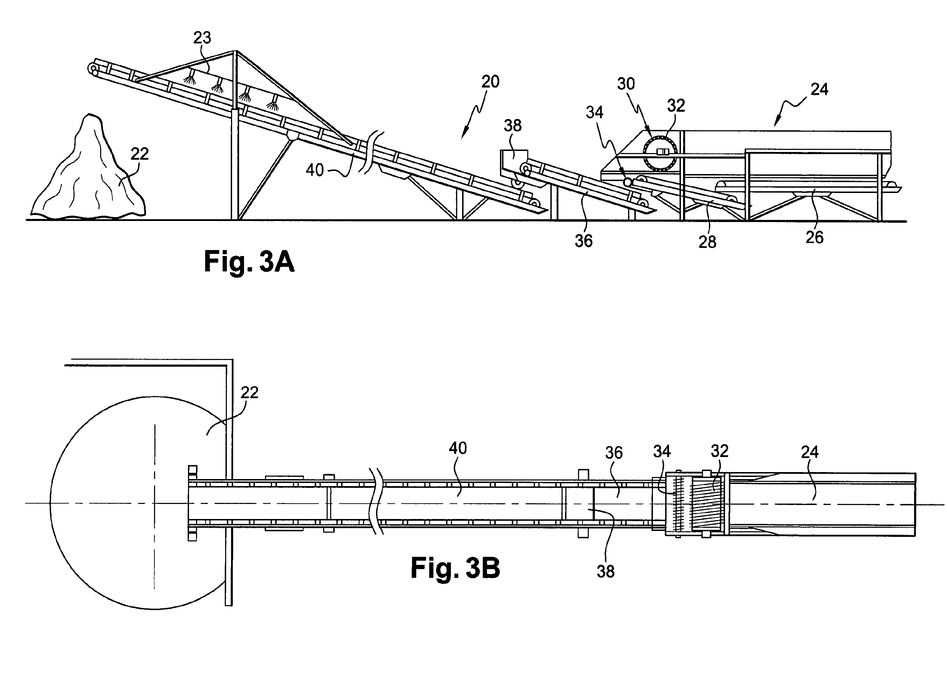

Selon un mode de réalisation préférentiel, on utilise un mélangeur 20 représentée sur les figures 3A et 3B. Ce mélangeur a pour objet de réaliser un mélange homogène et aéré 22.

Il est aussi possible à ce stade de corriger l'humidité du mélange par exemple en installant des asperseurs 23 qui utilisent notamment l'eau de recyclage comme cela sera expliqué plus avant.

Ce mélangeur comprend de façon simplifiée une zone de réception sous forme d'une trémie 24 qui accueille le matériau pré-mélangé du gros tas sur un premier convoyeur 26 qui alimente lui-même un second convoyeur incliné 28 surmonté de moyens d'aération 30, en l'occurrence un rouleau 32 de refus qui assure simultanément le refus de matière pour assurer une régulation avec un débit donné.

En sortie du tapis incliné 28, il est prévu en aval des moyens d'aération, un émotteur 34 qui alimente à son tour un convoyeur 36 avec un nouvel émotteur 38, nécessaire pour assurer un bon fractionnement.

En sortie de ce nouvel émotteur 38, il est prévu un tapis de transfert 40 de grande longueur car la pente demandée par le produit reste faible et il faut réaliser un monticule d'une hauteur suffisante.

Sur ce convoyeur, on profite aussi de la longueur pour assurer une première phase d'aération car la couche de matière déposée est très faible, maîtrisée grâce au différentiel de vitesse. En effet, en jouant sur les différentiels de vitesse, on peut déterminer un débit précis, qui correspond à une épaisseur donnée de matériau. Cette étape permet d'emmagasiner un fort taux d'oxygène.

Cet agencement décrit est totalement optimisé mais pourrait être simplifié sans pour cela sortir du cadre de la présente invention, l'agencement dépendant aussi du débit souhaité et du volume de production de compost envisagé.

La qualité du mélange conditionne parfaitement la fermentation à suivre.

Le mélange 22 réalisé est prêt pour la fermentation et doit être transféré vers l'enceinte 42 de fermentation puisque l'opération se déroule en lots.

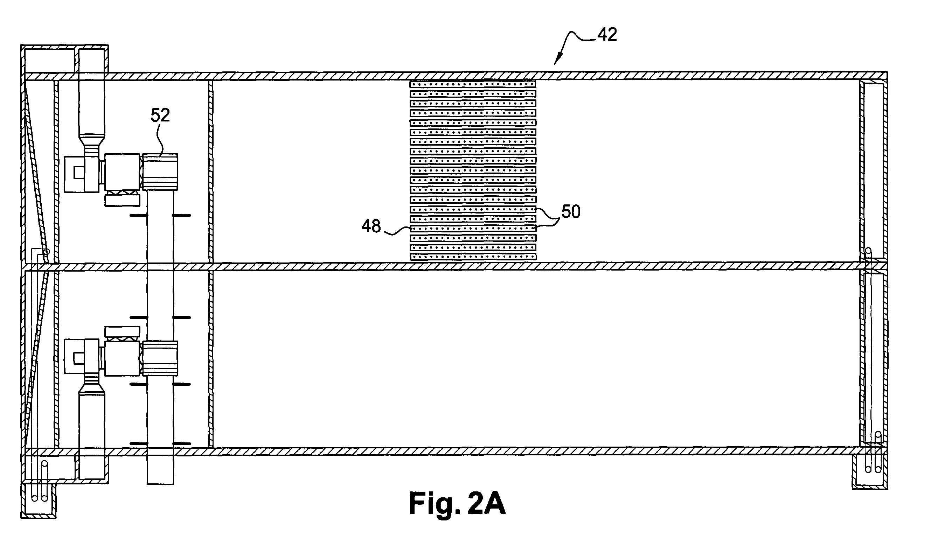

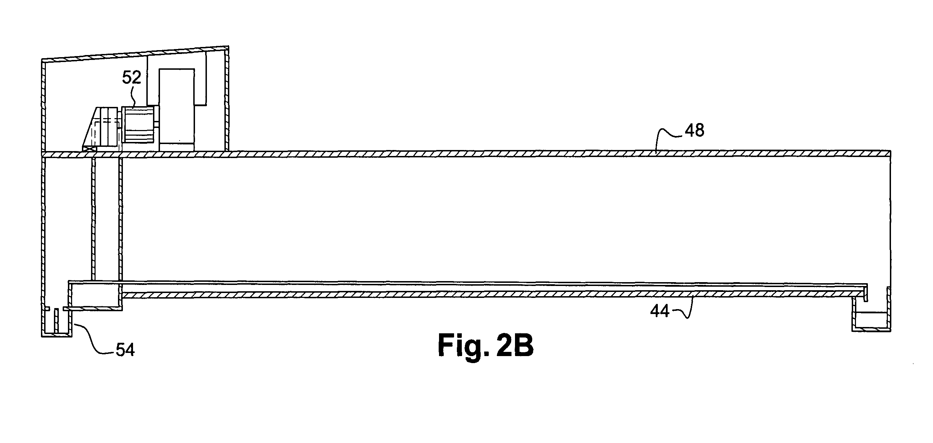

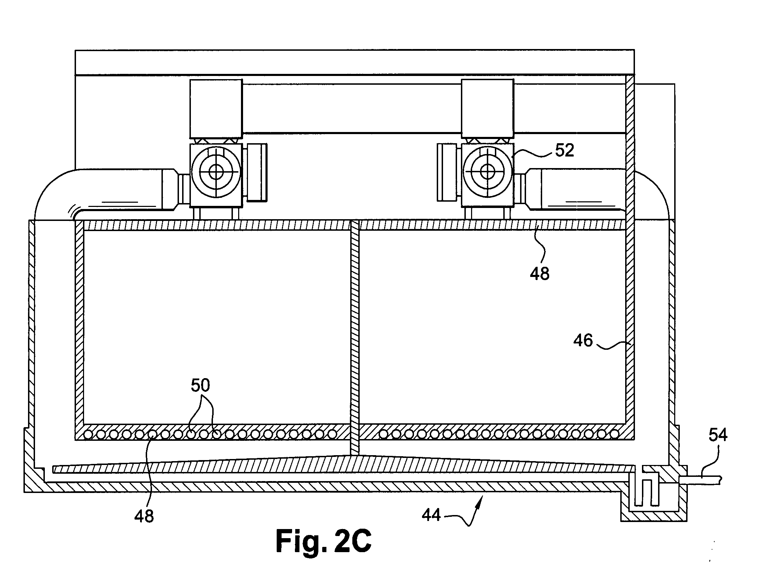

Cette enceinte 42 de fermentation est représentée sur les figures 2A à 2C.

L'enceinte est close et comprend un plancher 44, des murs 46 et un plafond 47. De façon avantageuse, ces enceintes ont une constitution en forme de tunnel longitudinal avec une porte d'entrée et une porte de sortie.

Le plancher utilisé est particulier en ce sens qu'il comprend des canalisations 48 noyées dans ce plancher et comprenant des buses 50 de sortie en très grand nombre, régulièrement réparties sur la surface, qui ne font pas saillie du sol de façon à ne pas être dégradées lors des chargements et déchargements desdites enceintes avec des moyens motorisés lourds comme des chargeurs à godets. Pour donner un ordre d'idée, les buses sont séparées de moins de 50 cm les unes des autres. Compte tenu du caractère agressif du mélange, il est nécessaire de recourir à un matériau adapté.

Ces canalisations sont alimentées en air sous pression à partir d'un groupe 52 de ventilation forcée, dans le cas présent, un groupe rapporté sur le toit de chaque enceinte.

Les liquides sont gérés par des moyens 54 de recueil et d'évacuation. Ces moyens comprennent avantageusement un système de pentes du plancher et de regard de collecte avant envoi vers un bac, non représenté.

Ces liquides sont essentiellement des eaux de condensation et sont de préférence réutilisés pour corriger le degré d'humidité lors des différentes phases et notamment lors du passage dans le convoyeur mélangeur ainsi qu'indiqué précédemment.

L'air de l'enceinte close est capté, contrôlé, ajusté quant à ses paramètres, température, degré hygrométrique grâce à des apports d'air neuf et remis en circulation à travers un circuit fermé.

L'air en excès dans ce circuit, excès qui est engendré par les apports d'air neuf, est rejeté dans l'atmosphère.

Préalablement à la mise dans l'atmosphère, l'air rejeté passe à travers un biofiltre.

Dans l'enceinte close, la fermentation se déroule en plusieurs phases qui nécessitent une optimisation des températures, du degré hygrométrique, des circulations d'air et des concentrations en oxygène. Ces paramètres permettent de gérer les populations de bactéries et de champignons dont l'activité est adaptée en fonction des différentes matières.

La température est gérée par ces mêmes moyens en introduisant plus ou moins d'air frais extérieur.

Un logiciel adapté permet de gérer ces apports d'air frais et donc les quantités d'oxygène et d'humidité nécessaires pour contrôler tous les paramètres de température, d'apport en oxygène et de degré hygrométrique en fonction des qualités de l'air extérieur. Des moyens d'introduction d'eau dans le circuit fermé peuvent être adjoints.

Le procédé prévoit une étape d'hygiénisation du produit qui consiste à monter en température au-delà d'une température assurant la destruction des organismes pathogènes et du pouvoir germinatif des graines adventives.

C'est l'avantage essentiel du dispositif présenté qui, grâce au plancher à diffusion répartie, permet d'injecter de l'air dans l'ensemble du mélange en fermentation et d'atteindre en tous points de ce mélange en fermentation une température homogène de consigne, particulièrement 74°C.

Bien entendu, la composition du mélange doit être adaptée pour que la matière organique soit suffisante pour atteindre la poussée exothermique nécessaire.

Cette réaction de fermentation est maintenue dans de telles conditions d'hygiénisation pendant 36 heures au plus pour donner un ordre de grandeur. La fermentation est maintenue ensuite une dizaine de jours au total avec des paliers de températures décroissants.

Un autre grand avantage de ce dispositif est de maîtriser le passage par les différents paliers grâce à l'apport d'air frais.

La constitution de l'enceinte en forme de tunnel est avantageuse car elle autorise une entrée par une porte et la sortie par l'autre, évitant le croisement des flux, ce qui est un gage de qualité et de reproductibilité, sans pollution de produit sortant par du produit entrant.

Le mélange fermentée et hygiénisé est alors transféré dans une autre enceinte, à savoir un couloir 58 de maturation du même type que l'enceinte de fermentation.

On pourrait conserver la même enceinte et laisser le mélange dans le tunnel de fermentation mais il est économiquement intéressant de changer d'enceinte car la diffusion d'air est moins importante car le produit est plus homogène et moins réactif. De plus, la durée étant plus longue, l'enceinte ne devant pas nécessairement être close conduisent économiquement au changement d'enceinte.

Le transfert de lieu permet aussi de réduire la hauteur du mélange pour limiter l'accumulation de la matière organique et éviter une trop forte montée en température qui priverait le mélange du développement d'une faune microbiologique adaptée.

Cette phase de maturation consiste à laisser se poursuivre la dégradation lente de la matière organique qui va se réorganiser et se stabiliser en éléments complexes pré-humiques.

Une ventilation forcée permet aussi de maintenir la température dans une plage comprise entre 25 et 40°C. Il n'y a pas de nécessité d'une enceinte close d'où la dénomination de couloir, sans porte. Les tuyauteries de diffusion de l'air peuvent être en matériau moins noble, les contraintes étant moindres. La densité de répartition est également plus faible.

Ainsi, le développement de champignons mésophiles ayant un rôle prépondérant sur la maturation et sur la désodorisation du produit devient possible.

La fin de la maturation est constatée par des observations directes et par des analyses simples du type mesures du taux d'humidité, du taux de NH₄ et du pH.

Ces tests pourront évoluer au gré des contraintes de la législation et des moyens de mesure et de contrôle commercialisés.

La durée de maturation est variable entre 8 et 25 jours pour indiquer un ordre de grandeur.

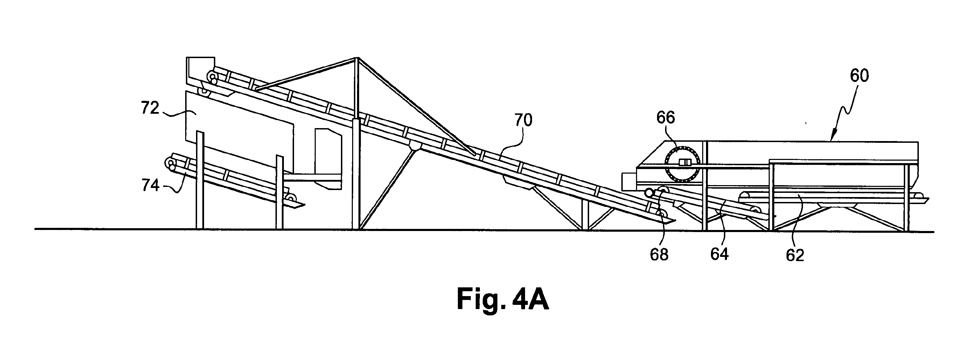

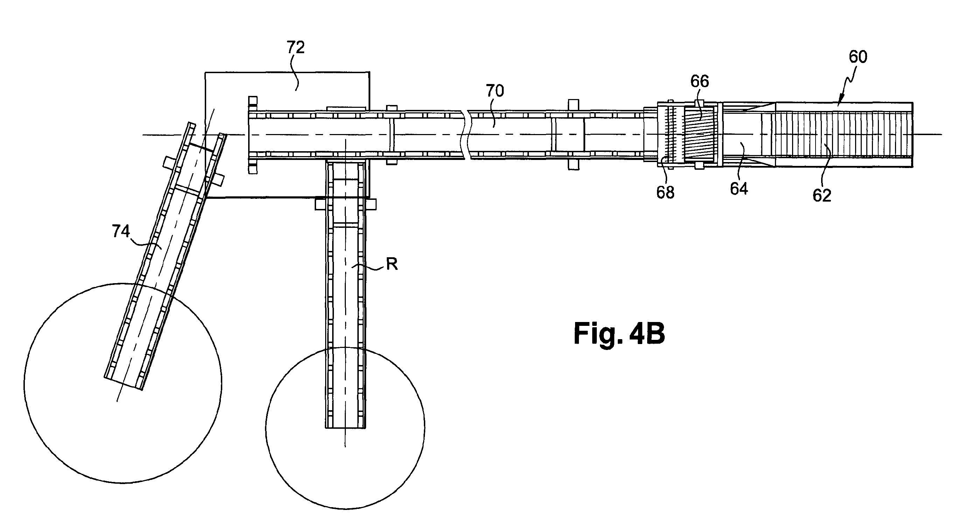

En sortie de maturation, le compost est de préférence criblé et une installation 60 est représentée sur les figures 4A et 4B.

Cette installation de criblage comprend une zone de réception sous forme d'une trémie qui accueille le matériau homogène en sortie de la maturation, et le dirige sur un premier convoyeur 62 qui alimente lui-même un second convoyeur incliné 64 surmonté d'un rouleau 66 de refus qui assure le refus de matière pour assurer une régulation avec un débit donné.

En sortie du second convoyeur incliné 64, il est prévu un émotteur 68.

En sortie de cet émotteur 68, il est prévu un tapis de transfert 70 de grande longueur car la pente demandée par le produit reste faible et il faut pouvoir déverser un débit donné et régulier dans un crible 72 vibrant à balourd dans le cas représenté.

Durant cette phase, on assure simultanément le refroidissement donc la stabilisation du produit avant le stockage.

En sortie de ce crible, il est prévu deux convoyeurs d'évacuation dont l'un R qui transfère les refus n'est visible que sur la figure 4B, lesdits refus étant recyclés directement dans le pré-mélange.

Quant à l'autre convoyeur 74, il transfère les passants qui ont donc la granulométrie souhaitée.

Différentes mailles peuvent être prévues pour assurer un criblage avec différentes granulométries suivant les besoins.

Le type de crible 72 importe peu et on pourrait recourir à un crible à trommel rotatif ou un crible à étoile.

Le produit final stabilisé est ensuite placé en monticule avant expédition, prêt à l' utilisation.

Parallèlement à ces différentes étapes, l'air qui est issu des différents tunnels et des différents lieux de travail est collecté et traité comme indiqué précédemment.

Quant à l'air rejeté, afin d'éviter de délivrer parfaitement épuré dans l'atmosphère, il passe dans un biofiltre 56.

Ce biofiltre compren d une biomasse 78 à base de bois, l'air à traiter étant diffusé à travers un réseau 80 de tuyaux perforés disposés sous la biomasse.

De façon complémentaire, si nécessaire, il est possible d'installer une tour de lavage 76 préalable au passage à travers la biomasse.

## Revendications

1. Procédé de préparation de compost **caractérisé en ce qu'**il comprend la succession des étapes suivantes:
- préparation d'une matière de base comprenant une première matière fermentescible et une seconde matière à co-produits,
- mélange grossier de cette préparation équilibrée en azote et carbone pour constituer un gros tas aéré,
- maintien statique dans une enceinte de fermentation et circulation d'air à travers le mélange avec contrôle de la température, du taux d'oxygène et de l'humidité pour assurer une hygiénisation du mélange avec une élimination de la flore pathogène et du pouvoir germinatif des graines adventives,
- maintien statique dans une enceinte de maturation et circulation d'air à travers le mélange avec contrôle de température et d'humidité pour assurer un développement de la flore mésophile, et
- stockage.

2. Procédé de fabrication d'un compost selon la revendication 1, **caractérisé en ce qu'**il consiste à choisir la première matière fermentescible parmi les résidus de station d'épuration et/ou la fraction fermentescible des ordures ménagères et/ou les déjections animales et/ou les déchets de l'industrie alimentaire et/ou de l'industrie du papier et/ou les déchets de gazon et de feuilles et à choisir la seconde matière à co-produits parmi les matières organiques cellulo-ligneuses en sorte de pouvoir réaliser une préparation équilibrée en azote et carbone.

3. Procédé de fabrication d'un compost selon la revendication 1 ou 2, **caractérisé en ce qu'**il consiste à passer la préparation du gros tas dans un mélangeur en sorte d'émotter ce mélange grossier, de l'aérer et de le brasser intimement.

4. Procédé de fabrication d'un compost selon la revendication 1, 2 ou 3, **caractérisé en ce qu'**il consiste à passer le produit issu de la maturation dans un crible, avant stockage pour le stabiliser et récupérer la fraction ou les fractions granulométriques souhaitées, le refus étant recyclé.

5. Procédé de fabrication d'un compost selon l'une quelconque des revendications précédentes, **caractérisé en ce qu'**il consiste, au cours de l'étape de fermentation, à faire circuler l'air à travers l'ensemble du mélange de façon homogène.

6. Procédé de fabrication de compost selon l'une quelconque des revendications précédentes, **caractérisé en ce qu'**il consiste, au cours de l'étape de fermentation, à capter l'air de l'enceinte close, à le contrôler, à l'ajuster quant à ses paramètres, température, degré hygrométrique grâce à des apports d'air neuf et à le remettre en circulation à travers un circuit fermé, l'air en surplus étant rejeté.

7. Procédé de fabrication de compost selon l'une quelconque des revendications précédentes, **caractérisé en ce que** la température pour assurer une hygiénisation du mélange pour élimination de la flore pathogène et du pouvoir germinatif des graines adventives est de 74°C.

8. Dispositif de fabrication de compost pour la mise en oeuvre du procédé selon l'une des revendications 1 à 7, **caractérisé en ce qu'**il comprend :
- une zone (10) d'accueil de la première matière (14) fermentescible et de la seconde matière (16) à co-produits,
- une zone (18) de pré-mélange,
- un mélangeur (20),
- une enceinte (42) close de fermentation,
- une enceinte (58) de maturation, et
- une installation de criblage (60).

9. Dispositif de fabrication de compost selon la revendication 8, **caractérisé en ce que** l'enceinte (42) de fermentation close est un tunnel longitudinal avec une porte d'entrée et une porte de sortie, tunnel qui comprend un plancher (44), des murs (46), un plafond (48), ledit plancher utilisé comprenant des canalisations (48) noyées dans ce plancher et des buses (50) de sortie en très grand nombre, ces buses étant alimentés en air sous pression à partir d'un groupe (52) de ventilation forcée.

10. Dispositif de fabrication de compost selon la revendication 8 ou 9, **caractérisé en ce qu'**il comprend des moyens de captage de l'air de l'enceinte (42) close de fermentation, des moyens de contrôle, des moyens d'ajustement des paramètres de l'air, température, degré hygrométrique, taux d'oxygène grâce à des apports d'air neuf et à des moyens de mise en circulation à travers un circuit fermé équipé de moyens de rejet de l'air en surplus.

11. Dispositif de fabrication de compost selon la revendication 8, 9 ou 10, **caractérisé en ce que** le mélangeur (20) comprend une zone de réception sous forme d'une trémie (24) qui accueille le matériau pré-mélangé issu de la zone (18) sur un premier convoyeur (26), un second convoyeur incliné (28) surmonté de moyens d'aération (30) comportant un rouleau (32) de refus, un émotteur (34), un convoyeur (36) avec un nouvel émotteur (38) et un tapis de transfert (40) de grande longueur.

12. Dispositif de fabrication de compost selon l'une des revendications 8 à 11, **caractérisé en ce qu'**il comprend des moyens de contrôle de l'humidité du matériau pré-mélangé.

13. Dispositif de fabrication de compost selon l'une des revendications 8 à 12, **caractérisé en ce que** l'installation de criblage comprend une zone de réception du matériau homogène en sortie de la maturation, un premier convoyeur (62), un second convoyeur incliné (64) surmonté d'un rouleau (66) de refus, un émotteur (68), un tapis de transfert (70) de grande longueur, un crible (72) du type vibrant à balourd, à trommel rotatif ou en étoile.
